# EUROPEAN PATENT APPLICATION

(11) **EP 4 734 259 A1**
(43) Date of publication of application: **29.04.2026**
(21) Application number: 24910122.1
(22) Date of filing: 09.10.2024
(51) Int. Cl.: H01M 50/342, H01M 50/636, H01M 50/186

(54) **BATTERY**

(30) Priority: 29.12.2023 CN 202323663212 U
(71) Applicant: Zhuhai CosMX Battery Co., Ltd., Zhuhai, Guangdong 519180 (CN)
(72) Inventor: WEI, Zhida, Zhuhai, Guangdong 519180 (CN); WANG, Tao, Zhuhai, Guangdong 519180 (CN); WANG, Yongwang, Zhuhai, Guangdong 519180 (CN); XIE, Jichun, Zhuhai, Guangdong 519180 (CN)
(74) Representative: Elzaburu S.L.P.
(86) International application number: PCT/CN2024/123573
(87) International publication number: WO 2025/139180

(57) **Abstract**

A battery, including a housing, a battery cell located in the housing, a sealing cap, and a sealant, where the housing has an electrolyte injection port, and the sealing cap covers the electrolyte injection port and is connected to the housing; the sealing cap has a through hole for bring the inside and the outside of the housing into communication; and the sealant fills and seals the through hole. While ensuring good sealing performance of the electrolyte injection port, the sealant can be melted at a high temperature when pressure inside the battery is required to be relieved, such that the pressure can be released through the through hole; whereas at a normal temperature, the sealing cap cooperates with the sealant to provide good strength and stability, so as to prevent cracking when the battery is dropped or subjected to impact.

## Description

The present application claims the priority to Chinese Patent Application No. 202323663212.1, filed with the China National Intellectual Property Administration on December 29, 2023 and entitled "BATTERY", which is incorporated herein by reference in its entirety.

### TECHNICAL FIELD

The present application relates to the technical field of batteries, and in particular to a battery.

### BACKGROUND

Batteries are widely applied to a variety of power supply devices, including consumer electronics, new energy vehicles, and energy storage devices. The batteries have different sizes and structures depending on application scenarios, and housings of the batteries can be made of different materials.

In the related art, it is necessary to form an electrolyte injection hole in the housing of the battery, for injecting an electrolyte into the battery, and after the electrolyte has been injected, the electrolyte injection hole is required to be sealed with a sealing cap in order to prevent electrolyte leakage. Moreover, in order to provide a pressure relief function, it is necessary to thin the sealing cap such that a high pressure inside the battery can break through the sealing cap under special circumstances to relieve the pressure.

However, in a conventional battery structure, the sealing cap is prone to cracking when the battery is dropped or subjected to impact, resulting in insufficient safety and reliability of the battery.

### SUMMARY

In view of the above problems, embodiments of the present application provide a battery to solve the technical problem of a sealing cap in a conventional battery structure being prone to cracking when the battery is dropped or subjected to impact, resulting in insufficient safety and reliability of the battery.

In order to achieve the above objective, the present application provides a battery, which includes a housing, a battery cell located in the housing, a sealing cap, and a sealant, where the housing has an electrolyte injection port, and the sealing cap covers the electrolyte injection port and is connected to the housing; the sealing cap has a through hole for bring the inside and the outside of the housing into communication; and the sealant fills and seals the through hole.

In the battery according to the embodiments of the present application, by forming the through hole in the sealing cap and sealing the through hole with the meltable sealant, while ensuring good sealing performance of the electrolyte injection port, the sealant can be melted at a high temperature when pressure inside the battery is required to be relieved, such that the pressure can be released through the through hole; whereas at a normal temperature, the sealing cap cooperates with the sealant to provide good strength and stability, so as to prevent cracking when the battery is dropped or subjected to impact.

In some embodiments, a melting point of the sealant is greater than or equal to 100°C and less than or equal to 130°C.

In some embodiments, a diameter of the through hole may be greater than or equal to 0.5 mm.

In some embodiments, a height dimension of the sealing cap in an axial direction of the through hole is greater than or equal to 0.3 mm and less than or equal to 2 mm.

In some embodiments, a lower surface of the sealant extends outside the through hole, and a distance between the lower surface of the sealant and a bottom surface of the sealing cap is less than or equal to 0.3 mm; and/or an upper surface of the sealant extends outside the through hole, and a distance between the upper surface of the sealant and a top surface of the sealing cap is less than or equal to 0.2 mm.

In some embodiments, a projection of the sealant in a first direction covers a projection of the sealing cap in the first direction.

In some embodiments, the sealing cap has a groove, the sealant is located in the groove, the through hole is located in the bottom of the groove, and the sealant covers the through hole.

In some embodiments, the groove may be fully filled with the sealant; and at least a part of the sealant extends outside the groove.

In some embodiments, an outer edge of the sealant extending outside the groove extends beyond an edge of the sealing cap, and a distance between the outer edge of the sealant and the edge of the sealing cap is greater than or equal to 0.2 mm; and/or a height of the sealant extending outside the groove is less than or equal to 0.1 mm.

In some embodiments, the sealing cap is welded to an outer wall of the housing, a weld seam is formed between the sealing cap and the housing, and the sealant at least partially covers the weld seam.

In some embodiments, the sealing cap is connected to the housing by hot-pressing with a hot melt adhesive, the hot melt adhesive extending outside the edge of the sealing cap, the hot melt adhesive extending from the edge of the sealing cap.

In some embodiments, the sealant is in contact with the extending hot melt adhesive.

In some embodiments, the sealant may include a plurality of sealing layers arranged sequentially in the axial direction of the through hole.

In some embodiments, the battery may further include a terminal post disposed on the housing, where the battery cell includes a first tab and a second tab, the terminal post is connected to the first tab, and a distance between a bottom wall of the sealing cap and an inner wall of the housing is less than a distance between a bottom wall of the terminal post and the inner wall of the housing.

In some embodiments, the battery may further include an interconnection tab, where the interconnection tab is connected to an outer wall of the housing, and an upper surface of the sealant is lower than an upper surface of the interconnection tab.

In some embodiments, a side wall of the sealing cap is inclined in cross-section; or the side wall of the sealing cap has a stepped configuration in cross-section.

In some embodiments, a hardness of the sealant is greater than or equal to 30 HB and less than or equal to 100 HB.

In some embodiments, the sealant contains a fluorescent agent.

In some embodiments, the housing includes a housing body and an extension extending outwardly from the housing body, the battery includes a terminal post located at the extension, the terminal post extending in a second direction, and the sealant and the sealing cap are located at the extension.

In some embodiments, a top surface of the sealant does not extend beyond a top surface of the housing.

In some embodiments, the sealant is of an "I"-shaped structure.

The present application provides a battery, which includes a housing, a sealing cap, and a sealant, where the housing has an electrolyte injection port, and the sealing cap covers the electrolyte injection port and is connected to the housing; the sealing cap has a through hole for bring the inside and the outside of the housing into communication; and the sealant fills and seals the through hole. While ensuring good sealing performance of the electrolyte injection port, the sealant can be melted at a high temperature when pressure inside the battery is required to be relieved, such that the pressure can be released through the through hole; whereas at a normal temperature, the sealing cap cooperates with the sealant to provide good strength and stability, so as to prevent cracking when the battery is dropped or subjected to impact.

In addition to the technical problems solved by the present application described above, the technical features constituting the technical solutions and the beneficial effects brought about by the technical features of these technical solutions, other technical problems that can be solved by the battery provided by the present application, the other technical features included in the technical solutions and the beneficial effects brought about by these technical features will be further described in detail in the specific embodiments.

### BRIEF DESCRIPTION OF DRAWINGS

To describe the technical solutions in embodiments of the present application or in the prior art more clearly, the following briefly describes the accompanying drawings required for describing the embodiments or the prior art. It is clear that the accompanying drawings in the following descriptions are merely some embodiments of the present application, and those of ordinary skill in the art may still derive other drawings from these accompanying drawings without creative efforts.
FIG. 1 is a first schematic structural view of a battery according to an embodiment of the present application;
FIG. 2 is a second schematic structural view of the battery according to an embodiment of the present application;
FIG. 3 is an exploded view of the battery according to an embodiment of the present application;
FIG. 4 is a first cross-sectional view of the battery according to an embodiment of the present application;
FIG. 5 is a second cross-sectional view of the battery according to an embodiment of the present application;
FIG. 6 is a third cross-sectional view of the battery according to an embodiment of the present application; and
FIG. 7 is a fourth cross-sectional view of the battery according to an embodiment of the present application.

### List of reference signs:

10 - Battery;
100 - Housing;
101 - Extension;
110 - Electrolyte injection port;
200 - Sealing cap;
210 - Through hole;
220 - Groove;
300 - Sealant;
310 - Sealing layer;
400 - Terminal post;
500 - Interconnection tab;
600 - Insulating mounting member;
700 - Electrical connection piece;
800 - Insulating piece.

### DESCRIPTION OF EMBODIMENTS

In order to make the objectives, technical solutions and advantages of the present application clearer, the technical solutions in the embodiments of the present application will be described clearly and completely below with reference to the accompanying drawings in the embodiments of the present application. Apparently, the embodiments described are some of, rather than all of, the embodiments of the present application. All other embodiments obtained by a person of ordinary skill in the art based on the embodiments of the present application without creative efforts shall fall within the scope of protection of the present application.

Batteries are widely applied to a variety of power supply devices, including consumer electronics, new energy vehicles, and energy storage devices. The batteries have different sizes and structures depending on application scenarios, and housings of the batteries can be made of different materials. At present, it is necessary to form an electrolyte injection hole in the housing of the battery, for injecting an electrolyte into the battery, and after the electrolyte has been injected, the electrolyte injection hole is required to be sealed with a sealing cap in order to prevent electrolyte leakage. Moreover, in order to provide a pressure relief function, it is necessary to thin the sealing cap such that a high pressure inside the battery can break through the sealing cap under special circumstances to relieve the pressure.

However, in a conventional battery structure, due to the need for the thinning design on the sealing cap, the structural strength of the sealing cap is insufficient, and the sealing cap is prone to cracking when the battery is dropped or subjected to impact, resulting in insufficient safety and reliability of the battery.

The present application provides a battery. By forming a through hole in a sealing cap and sealing the through hole with a meltable sealant, while ensuring good sealing performance of an electrolyte injection port, the sealant can be melted at a high temperature when pressure inside the battery is required to be relieved, such that the pressure can be released through the through hole; whereas at a normal temperature, the sealing cap cooperates with the sealant to provide good strength and stability, so as to prevent cracking when the battery is dropped or subjected to impact, thereby improving the stability and reliability of the battery.

The battery of the embodiments of the present application will be described below with reference to the accompanying drawings. It should be noted that the battery according to the embodiments of the present application may be a secondary battery, that is, the battery in the embodiments of the present application can be recharged and discharged for cyclic use, the particular type of the battery may include, but not limited to, a lithium battery, a lithium cobaltate battery, a lithium iron phosphate battery, and a ternary battery, and the battery and scenarios where the battery can be used, include, but are not limited to, an electronic product, a communication device, and a vehicle, for example, a mobile phone, a computer, and a new energy automobile, which will not be limited specifically in the embodiments of the present application.

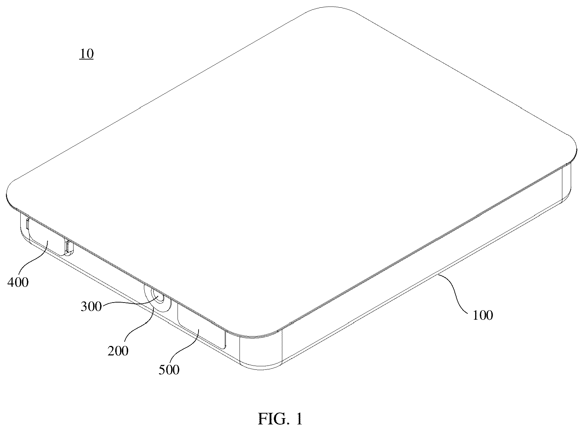

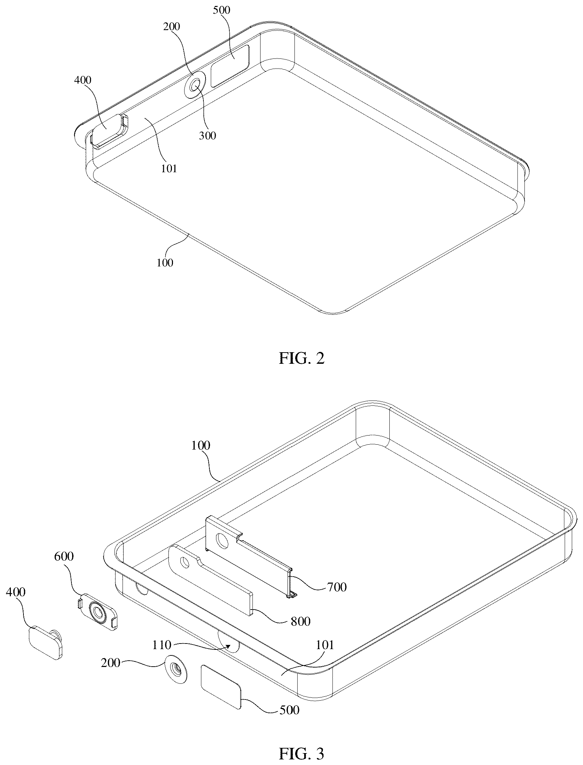

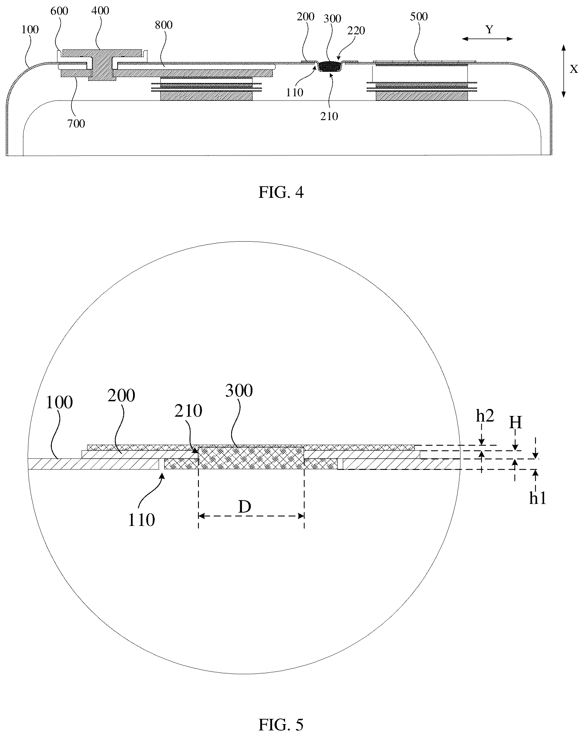

FIG. 1 is a first schematic structural view of the battery according to an embodiment of the present application, FIG. 2 is a second schematic structural view of the battery according to an embodiment of the present application, FIG. 3 is an exploded view of the battery according to an embodiment of the present application, and FIG. 4 is a first cross-sectional view of the battery according to an embodiment of the present application.

Referring to Figs. 1 to 4, the embodiment of the present application provides a battery 10. The battery 10 includes a housing 100, a battery cell located in the housing 100, a sealing cap 200, and a sealant 300. The housing 100 has an electrolyte injection port 110, and the sealing cap 200 covers the electrolyte injection port 110 and is connected to the housing 100. The sealing cap 200 has a through hole 210. The through hole 210 brings the inside and the outside of the housing 100 into communication, and the sealant 300 fills and seals the through hole 210.

It should be understood that the housing 100 internally has an accommodating cavity in which, the battery cell of the battery 10 is disposed, an electrolyte can be injected into the accommodating cavity of the housing 100 through the electrolyte injection port 110, and the battery cell is immersed in the electrolyte. After the electrolyte has been injected, the electrolyte injection port 110 is sealed by the sealing cap 200, and the sealant 300 can seal the through hole 210 to ensure good sealing performance of the electrolyte injection port 110.

It should be understood that in the battery 10 according to the embodiments of the present application, by forming the through hole 210 in the sealing cap 200 and sealing the through hole 210 with the meltable sealant 300, while ensuring good sealing performance of the electrolyte injection port 110, the sealant 300 can be melted at a high temperature when pressure inside the battery 10 is required to be relieved, such that the pressure can be released through the through hole 210; whereas at a normal temperature, the sealing cap 200 cooperates with the sealant 300 to provide good strength and stability, so as to prevent cracking when the battery 10 is dropped or subjected to impact.

In addition, the housing 100 may be made of a conductive metal material, including but not limited to metal such as aluminum and iron or an alloy thereof, and the type of the metal material used is not specifically limited in the embodiments of the present application.

In some embodiments, the sealant 300 has good corrosion resistance, to prevent corrosion by the electrolyte. By way of example, the sealant 300 may be made of a material including, but not limited to, polystyrene, polypropylene, polyethylene, polyester, polyvinyl chloride, polyimide, acrylonitrile-butadiene-styrene plastic, polycarbonate, polyamide, acid-modified resin, polyethylene, polyhydroxyacetyl ethylenediamine, modified polyolefin resin, polyolefin, polyvinyl chloride, fluororubber, other polyolefins and copolymers thereof, epoxy acrylate, and urethane acrylate, which will not be specifically limited in the embodiments of the present application.

It should be understood that since the temperature inside the housing 100 also rises when the pressure inside the housing 100 is excessively high and is then required to be relieved, the sealant 300 can be melted at the high temperature inside the housing 100 to open the through hole 210 and then release the pressure. A melting point of the sealant 300 may be greater than or equal to 100°C and less than or equal to 130°C.

By way of example, the melting point of the sealant 300 may be 100°C, 101°C, 110°C, 120°C, 129°C, 130°C, etc., and is not specifically limited in the embodiments of the present application.

The specific dimensions of the sealing cap 200 will be described in detail below.

FIG. 5 is a second cross-sectional view of the battery according to an embodiment of the present application.

With continued reference to FIG. 5 and in conjunction with Figs. 1 to 3, in some embodiments, a diameter of the through hole 210 may be greater than or equal to 0.5 mm. In this way, when the pressure inside the housing 100 is required to be relieved, the through hole 210 has an enough diameter to discharge a high-pressure gas after the sealant is melted, so that the speed of pressure release is increased, and good safety is ensured.

By way of example, the through hole 210 may be a circular hole, and the diameter of the through hole 210 may be represented by D. The specific value of D may be 0.5 mm, 0.51 mm, 0.6 mm, 0.8 mm, 1 mm, 2 mm, 5 mm, etc., which is not specifically limited in the embodiments of the present application.

In some embodiments, a height dimension of the sealing cap 200 in an axial direction of the through hole 210 is greater than or equal to 0.3 mm and less than or equal to 2 mm. In this way, while providing good structural strength and ensuring good connection performance between the sealant 300 and the sealing cap 200, the sealing cap 200 is prevented from occupying an excessive space inside the housing 100, and the rational space utilization is ensured.

By way of example, the height dimension of the sealing cap 200 in the axial direction of the through hole 210 may be represented by H. The specific value of H may be 0.3 mm, 0.4 mm, 0.5 mm, 1 mm, 1.5 mm, 2 mm, 2.5 mm, 3 mm, 4 mm, 4.5 mm, 4.9 mm, and 5 mm, which is not specifically limited in the embodiments of the present application.

In some embodiments, a lower surface of the sealant 300 extends outside the through hole 210, and a distance between the lower surface of the sealant and a bottom surface of the sealing cap 200 is less than or equal to 0.3 mm.

By way of example, a thickness dimension of the lower surface of the sealant 300 that extends outside the bottom of the sealing cap 200 may be represented by h1. The specific value of h1 may be 0.01 mm, 0.1 mm, 0.2 mm, 0.29 mm, 0.3 mm, etc., which is not specifically limited in the embodiments of the present application.

In some embodiments, an upper surface of the sealant 300 extends outside the through hole 210, and a distance between the upper surface of the sealant and a top surface of the sealing cap is less than or equal to 0.2 mm.

By way of example, a thickness dimension of the upper surface of the sealant 300 that extends outside the top surface of the sealing cap 200 may be represented by h2. The specific value of h2 may be 0.01 mm, 0.1 mm, 0.19 mm, 0.2 mm, etc., which is not specifically limited in the embodiments of the present application.

In some embodiments, a projection of the sealant 300 in a first direction covers a projection of the sealing cap 200 in the first direction. The first direction is a thickness direction of the housing 100, that is, the first direction corresponds to the X direction in FIG. 4.

It should be noted that the sealing cap 200 may be of a sheet-like structure, and after the upper side and the lower side of the sealant 300 extend outside an upper end and a lower end of the through hole 210, the cross section of the sealant 300 is in an "I" shape.

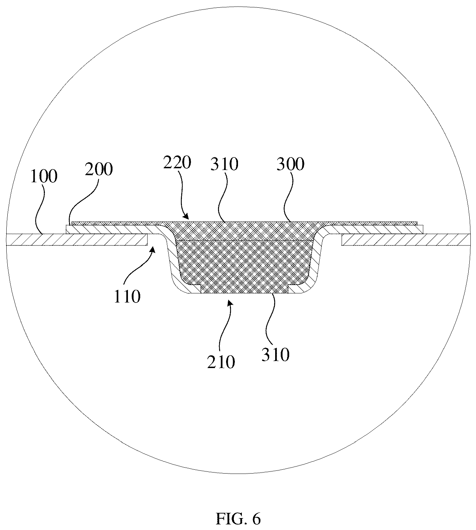

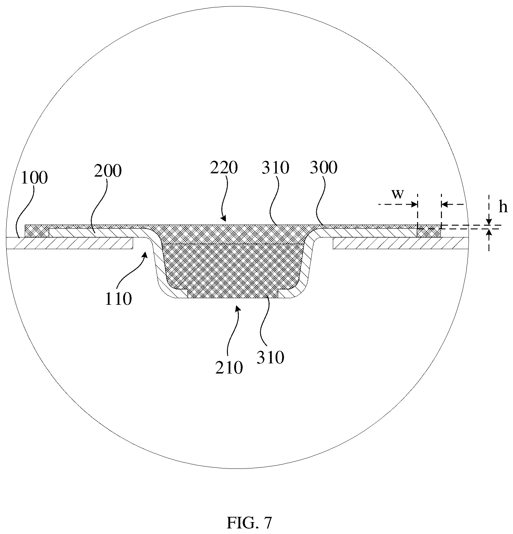

FIG. 6 is a third cross-sectional view of the battery according to an embodiment of the present application, and FIG. 7 is a fourth cross-sectional view of the battery according to an embodiment of the present application.

Referring to Figs. 6 and 7 and in conjunction with Figs. 1 to 4, in some embodiments, the sealing cap 200 has a groove 220, the sealant 300 is located in the groove 220, the through hole 210 is located in the bottom of the groove 220, and the sealant 300 covers the through hole 210. In this way, the sealant 300 and the sealing cap 200 have a larger contact surface, and the bonding reliability of the sealant 300 and the sealing cap 200 is improved. In addition, by filling the groove 220 with the sealant 300, the thickness of the sealant 300 can be increased, thereby achieving a better sealing effect.

By way of example, the sealant 300 may be filled in only the groove 220, that is, the sealant 300 does not extend outside the groove 220; or the sealant 300 may extend outside the groove 220.

In some embodiments, the groove 220 may be fully filled with the sealant 300. At least a part of the sealant 300 extends outside the groove 220, thereby increasing a coverage area of the sealant 300.

An outer edge of the sealant 300 extending outside the groove 220 extends beyond an edge of the sealing cap 200, and a distance between the outer edge of the sealant and the edge of the sealing cap 200 is greater than or equal to 0.2 mm. A height of the sealant 300 extending outside the groove 220 is less than or equal to 0.1 mm. Accordingly, a coverage range of the sealant 300 is enlarged while keeping the exterior of the housing 100 nearly flat, and the better connecting effect is achieved.

By way of example, the outer edge of the sealant 300 extending outside the groove 220 extends beyond the edge of the sealing cap 200 by a distance w. The specific value of w may be 0.2 mm, 0.21 mm, 0.3 mm, 0.4 mm, 0.5 mm, etc., which is not specifically limited in the embodiments of the present application.

By way of example, the height of the sealant 300 extending outside the groove 220 may be represented by h. The specific value of h may be 0.01 mm, 0.02 mm, 0.05 mm, 0.08 mm, 0.09 mm, 0.1 mm, etc., which is not specifically limited in the embodiments of the present application.

In some embodiments, the sealing cap 200 is welded to an outer wall of the housing 100, a weld seam is formed between the sealing cap 200 and the housing 100, and the sealant 300 at least partially covers the weld seam. In this way, the phenomenon can be prevented that the weld seam is in contact with an external electronic component, resulting in short circuiting.

In some other embodiments, the sealing cap 200 is connected to the housing 100 by hot-pressing with a hot melt adhesive. The hot melt adhesive extends outside the edge of the sealing cap 200, and the sealant 300 is in contact with the extending hot melt adhesive. In this way, the adhesion between the sealing cap 200 and the housing 100 can be improved.

In some embodiments, the sealant 300 may include a plurality of sealing layers 310. The plurality of sealing layers 310 are arranged sequentially in the axial direction of the through hole 210.

By way of example, two sealing layers 310 may be provided, in which an outer sealing layer 310 may be a waterproof material which has better waterproof property, thereby preventing moisture from entering the interior of the housing 100; and an inner sealing layer 310 may be an anti-corrosion material, thereby achieving a better effect of preventing the corrosion by the electrolyte.

In some embodiments, the battery 10 may further include a terminal post 400. A distance between a bottom wall of the sealing cap 200 and an inner wall of the housing 100 is less than a distance between a bottom wall of the terminal post 400 and the inner wall of the housing 100. The battery cell includes a first tab and a second tab, and the terminal post 400 is connected to the first tab.

The terminal post 400 may be a positive terminal post, and a bottom surface of the terminal post 400 has a greater distance from the inner wall of the housing 100, so that a portion of the sealing cap 200 inside the housing 100 reuses a space formed between the terminal post 400 and the inner wall of the housing 100, the space utilization rate can be improved, a recessed portion of the sealing cap 200 can be prevented from occupying other spaces inside the housing 100, and thus the energy density of the battery 10 can be increased. In addition, an insulating mounting member 600 is disposed between the terminal post 400 and the housing 100, an electrical connection piece 700 is disposed inside the housing 100, the terminal post 400 is connected to an electrode of the battery cell via the electrical connection piece 700, and an insulating piece 800 is disposed between the electrical connection piece 700 and the inner wall of the housing 100.

In some embodiments, the battery 10 may further include an interconnection tab 500. The interconnection tab 500 is connected to the outer wall of the housing 100, and an upper surface of the sealant 300 is lower than an upper surface of the interconnection tab 500.

The interconnection tab 500 may be a negative interconnection tab which may be welded to the outer wall of the housing 100, and the upper surface of the sealant 300 is lower than the interconnection tab 500, so that the good flatness of the outer wall of the housing 100 can be ensured.

In some embodiments, a side wall of the sealing cap 200 may inclined in cross-section. Alternatively, the side wall of the sealing cap 200 has a stepped configuration in cross-section. In this way, after the sealant 300 is melted, a high-pressure gas inside the accommodating cavity of the housing 100 can more easily break through the melted sealant 300 to allow for faster pressure relief.

An angle of inclination or a step size of the side wall of the sealing cap 200 is not specifically limited in the embodiments of the present application.

In some embodiments, a hardness of the sealant 300 is greater than or equal to 30 HB and less than or equal to 100 HB. In this way, the good structural reliability of the sealant 300 in a cured state can be guaranteed.

By way of example, the specific value of the hardness of the sealant 300 may be 30 HB, 31 HB, 40 HB, 50 HB, 60 HB, 70 HB, 80 HB, 90 HB, 99 HB, and 100 HB, which is not specifically limited in the embodiments of the present application.
In some embodiments, the sealant 300 contains a fluorescent agent. In this way, the fluorescent agent may reveal extension when exposed to external illumination with special light, including, but not limited to ultraviolet light and infrared light, thereby facilitating better detection of the shape of the sealant 300.

In some embodiments, the housing 100 includes a housing body and an extension 101 extending outwardly from the housing body, the battery 10 includes a terminal post 400 located at the extension 101, the terminal post 400 extending in a second direction, and the sealant 300 and the sealing cap 200 are located at the extension 101.

The second direction is a thickness direction of the battery, that is, the second direction corresponds to the Y direction in FIG. 4.

In some embodiments, a top surface of the sealant 300 does not extend beyond a top surface of the housing 100 to ensure the flatness of the top surface of the housing 100.

An assembly process of the sealing cap 200 will be illustrated below.

By way of example, in a specific assembly process, the sealant 300 may be first injected into the groove 220 of the sealing cap 200, and after the sealant 300 is cured, the sealing cap 200 and the sealant 300 form a whole; the sealing cap 200 is then placed on the electrolyte injection port 110 of the housing 100, and the sealing cap 200 and the housing 100 are subjected to laser welding; and finally the sealant 300 is laid such that the sealant 300 covers the weld seam formed by welding.

The present application provides a battery 10. The battery 10 includes a housing 100, a sealing cap 200, and a sealant 300. The housing 100 has an electrolyte injection port 110, and the sealing cap 200 covers the electrolyte injection port 110 and is connected to the housing 100; the sealing cap 200 has a through hole 210, the through hole 210 bringing the inside and the outside of the housing 100 into communication; and the sealant 300 fills and seals the through hole 210. While ensuring good sealing performance of the electrolyte injection port 110, the sealant 300 can be melted at a high temperature when pressure inside the battery 10 is required to be relieved, such that the pressure can be released through the through hole 210; whereas at a normal temperature, the sealing cap 200 cooperates with the sealant 300 to provide good strength and stability, so as to prevent cracking when the battery 10 is dropped or subjected to impact.

In the description of the present application, it should be noted that, unless expressly stated and defined otherwise, the terms "mounted", "connected", and "connection" should be understood in a broad sense, for example, it may be a fixed connection, or an indirect connection through an intermediate medium, and may be the communication between the interiors of two elements or the interaction between two elements. For those of ordinary skill in the art, the specific meaning of the terms mentioned above in the present application should be construed according to specific circumstances.

In the description of the embodiments of the present application, it should be understood that orientation or position relationships indicated by the terms such as "up", "down", "front", "rear", "left", "right", "vertical", "horizontal", "top", "bottom", "inside", and "outside" are based on orientation or position relationships shown in the accompanying drawings and are merely for ease of description of the present application and simplification of the description, rather than indicating or implying that the apparatuses or elements referred to must have a specific orientation or be constructed and operated in a specific orientation, and therefore cannot be construed as limiting the present application.

The terms "first", "second", "third", "fourth", etc. (if any) in the description, claims and the above accompanying drawings of the present application are used for distinguishing similar objects, but are not intended to indicate any particular order or sequence. It should be understood that the data used in this way may be interchanged where appropriate, so that the embodiments of the present application described herein can be implemented in an order other than those illustrated or described herein.

In addition, the terms "include", "have" and any variation thereof are intended to cover a non-exclusive inclusion, for example, a process, method, system, product, or device that includes a series of steps or units is not necessarily limited to those steps or units that are explicitly listed, but may include other steps or units not explicitly listed or inherent to such a process, method, product or device.

It should be finally noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and these modifications or substitutions do not make the essence of the corresponding technical solution depart from the scope of the technical solutions of the embodiments of the present application.

## Claims

1. A battery, comprising a housing, a battery cell located in the housing, a sealing cap, and a sealant, wherein the housing has an electrolyte injection port, and the sealing cap covers the electrolyte injection port and is connected to the housing; the sealing cap has a through hole for bring the inside and the outside of the housing into communication; and the sealant fills and seals the through hole.

2. The battery according to claim 1, wherein a melting point of the sealant is greater than or equal to 100°C and less than or equal to 130°C; and/or
a diameter of the through hole is greater than or equal to 0.5 mm; and/or
a height dimension of the sealing cap in an axial direction of the through hole is greater than or equal to 0.3 mm and less than or equal to 2 mm.

3. The battery according to claim 1 or 2, wherein a lower surface of the sealant extends outside the through hole, and a distance between the lower surface of the sealant and a bottom surface of the sealing cap is less than or equal to 0.3 mm; and/or an upper surface of the sealant extends outside the through hole, and a distance between the upper surface of the sealant and a top surface of the sealing cap is less than or equal to 0.2 mm.

4. The battery according to claim 1 or 2, wherein a projection of the sealant in a first direction covers a projection of the sealing cap in the first direction.

5. The battery according to claim 1 or 2, wherein the sealing cap has a groove, the sealant is located in the groove, the through hole is located in the bottom of the groove, and the sealant covers the through hole.

6. The battery according to claim 5, wherein the groove is fully filled with the sealant; and at least a part of the sealant extends outside the groove.

7. The battery according to claim 5, wherein an outer edge of the sealant extending outside the groove extends beyond an edge of the sealing cap, and a distance between the outer edge of the sealant and the edge of the sealing cap is greater than or equal to 0.2 mm; and/or a height of the sealant extending outside the groove is less than or equal to 0.1 mm.

8. The battery according to claim 1 or 2, wherein the sealing cap is welded to an outer wall of the housing, a weld seam is formed between the sealing cap and the housing, and the sealant at least partially covers the weld seam.

9. The battery according to claim 1 or 2, wherein the sealing cap is connected to the housing by hot-pressing with a hot melt adhesive, the hot melt adhesive extending outside an edge of the sealing cap.

10. The battery according to claim 9, wherein the sealant is in contact with the extending hot melt adhesive.

11. The battery according to claim 1 or 2, wherein the sealant comprises a plurality of sealing layers arranged sequentially in the axial direction of the through hole.

12. The battery according to claim 1 or 2, further comprising a terminal post disposed on the housing, wherein the battery cell comprises a first tab and a second tab, the terminal post is connected to the first tab, and a distance between a bottom wall of the sealing cap and an inner wall of the housing is less than a distance between a bottom wall of the terminal post and the inner wall of the housing.

13. The battery according to claim 1 or 2, further comprising an interconnection tab, wherein the interconnection tab is connected to an outer wall of the housing, and an upper surface of the sealant is lower than an upper surface of the interconnection tab.

14. The battery according to claim 1 or 2, wherein a side wall of the sealing cap is inclined in cross-section; or the side wall of the sealing cap has a stepped configuration in cross-section.

15. The battery according to claim 1 or 2, wherein a hardness of the sealant is greater than or equal to 30 HB and less than or equal to 100 HB; and the sealant contains a fluorescent agent.

16. The battery according to claim 1 or 2, wherein the housing comprises a housing body and an extension extending outwardly from the housing body, the battery comprises a terminal post located at the extension, the terminal post extending in a second direction, and the sealant and the sealing cap are located at the extension.

17. The battery according to claim 16, wherein a top surface of the sealant does not extend beyond a top surface of the housing.

18. The battery according to claim 17, wherein the sealant is of an "I"-shaped structure.
